# EUROPEAN PATENT SPECIFICATION

(11) **EP 2 592 318 B1**
(45) Date of publication and mention of the grant of the patent: **22.10.2014**
(21) Application number: 11188227.0
(22) Date of filing: 08.11.2011
(51) Int. Cl.: F16K 17/02, F17D 1/20

(54) **Pipeline protection systems**
Pipelineschutzsysteme
Systèmes de protection de canalisation

(43) Date of publication of application: 15.05.2013
(73) Proprietor: Vetco Gray Controls Limited, Bristol BS48 1BS (GB)
(72) Inventor: Davis, Julian, Frampton Cotterell, Bristol BS36 2LD (GB)
(74) Representative: Emerson, Peter James

(56) References cited:
- EP-A1- 0 701 089
- WO-A1-03/106888
- GB-A- 2 439 552
- US-A1- 2008 156 077
- US-A1- 2011 133 942

## Description

### Field of the Invention

This invention relates to pipeline protection systems.

### Background of the Invention

A high integrity pipeline protection system (HIPPS) is typically installed on a subsea well tree to provide an over-pressure protection safety instrumented system (SIS) for the subsea infrastructure, such as production flowlines, which are not rated to withstand the full well pressure. A HIPPS includes, typically, three or four pressure sensors which are electronically polled by a logic solving device such that if a majority (say at least 2 out of 3) or say just 2 out of 4 of the sensors show excessive pressure, a pair of series connected barrier or isolation valves in the production flow pipeline are closed so as to protect the downstream infrastructure from the over-pressure. In the event of a detected over-pressure condition, the HIPPS operates autonomously and independently of the production control system.

Once a HIPPS has operated, it is essential that the over-pressure condition be 'bled down' to enable the HIPPS barrier valves to be reopened and production flow resumed. Furthermore, as part of a HIPPS test and maintenance regime, to reduce the probability of failure on demand, it is necessary to simulate an over-pressure condition and either partly stroke or fully stroke (i.e. partly close or fully close) the HIPPS barrier valves. In order to achieve the above, additional valves are fitted, which by-pass the HIPPS barrier valves, and these form an important part of the HIPPS. Three series connected by-pass valves, connected in parallel with the HIPPS barrier valves, is a common configuration. Under normal circumstances, when the pressure rating of the pipeline is not exceeded, the by-pass valves are all closed. The by-pass valves are normally operated under the control of the production control system only when the HIPPS barrier valves are closed and must be operated in the correct sequence to properly exercise and bleed down the HIPPS. It is important that the by-pass valves are never configured so that all of them are opened simultaneously, as this compromises the integrity of the HIPPS. However, accidents do happen and a failure of the operator to correctly control the by-pass valves can result in a very expensive failure of the subsea infrastructure. This invention prevents erroneous operation of the by-pass valves, accidental or otherwise, thus avoiding the consequences of compromising the HIPPS.

As prior art there may be mentioned GB-A-2 401 164, GB-A-2 439 552, GB-A-2 466 057 and WO 03/106888.

### Summary of the Invention

According to the invention from one aspect there is provided a pipeline protection system comprising:
a pipeline for fluid flow;
a plurality of isolation valves in series in said pipeline;
means for sensing a fluid pressure in said pipeline and closing said isolation valves in response to said pressure exceeding a threshold;
a series connection of a plurality of by-pass valves connected in parallel across said isolation valves;
means for selectively opening and closing said by-pass valves; and
safety means adapted to prevent said by-pass valves all being open at the same time.

According to the invention from another aspect. there is provided a method of protecting a pipeline for fluid flow, comprising:
providing a plurality of isolation valves in series in said pipeline;
sensing a fluid pressure in said pipeline and closing said isolation valves in response to said pressure exceeding a threshold;
providing a series connection of a plurality of by-pass valves connected in parallel across said isolation valves; and
selectively opening and closing said by-pass valves if said isolation valves are closed, the method further comprising providing safety means adapted to prevent said by-pass valves all being open at the same time.

Each of said by-pass valves is typically hydraulically operable and can be opened by supplying hydraulic fluid under pressure from a respective hydraulic feed line to the by-pass valve. In this case, said means for selectively opening and closing said by-pass valves typically comprises a plurality of further valves each of which, when open, supplies hydraulic fluid under pressure from a hydraulic source to a respective one of the by-pass valves for opening the respective by-pass valve.

Said safety means preferably comprises second sensing means, for sensing pressure in each of such hydraulic feed lines and means coupled with said second sensing means for preventing the pressures in said lines being such as to open all said by-pass valves at the same time. In this case, said second sensing means typically comprises pressure sensors at respective ones of said hydraulic feed lines, said means coupled with said second sensing means then preferably comprises a logic device which polls outputs from said pressure sensors.

Said safety means is typically adapted for venting fluid from such a source to prevent said by-pass valves all being open at the same time. In this case, said safety means could comprise a directional control valve between said source and said further valves, said directional control valve supplying fluid from said source to said further valves but venting said fluid for preventing all said by-pass valves from being open at the same time.

### Brief Description of the Invention

Fig. 1 is a schematic diagram of a known form of HIPPS; and
Fig. 2 is a schematic diagram of an embodiment of a HIPPS according to this invention.

### Detailed Description of the Invention.

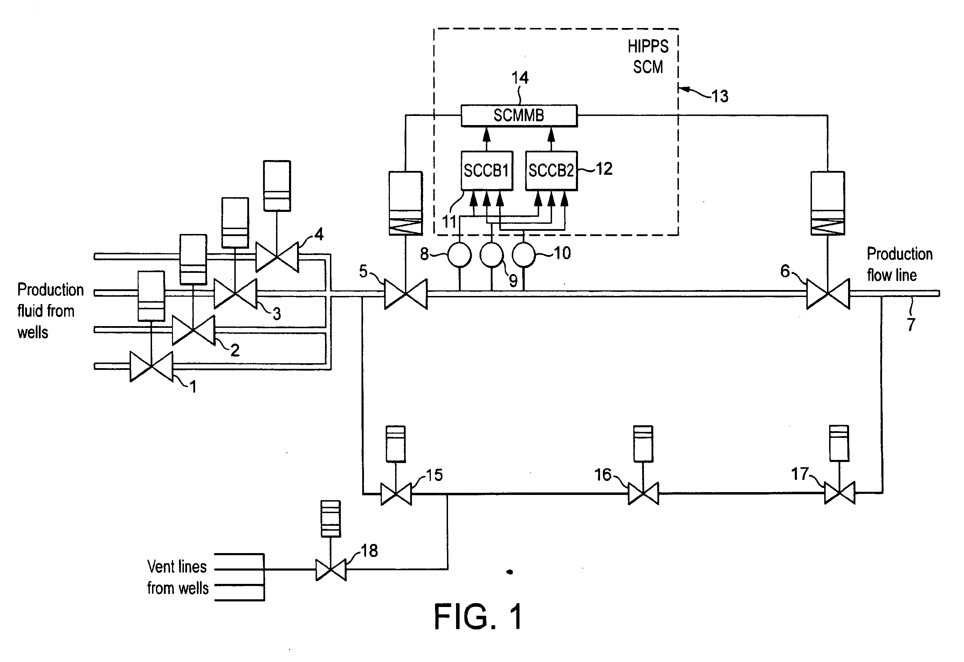

A typical HIPPS in the normal well fluid extraction mode, is shown schematically, in Fig. 1. Production fluid from wells, in this example four wells, flows via individual well shut down valves 1, 2, 3 and 4 through HIPPS isolation or barrier valves 5 and 6 to a pipeline comprising a production flowline 7. The fluid pressure in the production flowline is sensed by three pressure sensors 8, 9 and 10 and their outputs are fed to safety critical control boards (SCCBs) 11 and 12 in a HIPPS subsea control module (SCM) 13. SCCBs 11 and 12 are safety integrity rated (SIL) HIPPS logic solving devices which poll the sensor outputs. If at least two out of three of the pressures are greater than a pre-set threshold limit, the SCCBs 11 and 12 command the valves 5 and 6 to close via a subsea control module mother board (SCMMB) 14, by releasing the hydraulic pressure that kept them open against return springs.

If the barrier valves 5 and 6 are closed, this protects the production flowline 7 from over-pressure. Conventionally, in order to revert the production flow back to normal and thus safely open the HIPPS barrier valves 5 and 6, a set of by-pass valves 15, 16 and 17 and a vent valve 18 are provided which are normally closed under hydraulic pressure but which are operated by the well operator in a complex sequence to revert all fluid pressures back to normal. The hydraulic actuation lines to the valves 15, 16 and 17 are typically monitored by pressure transducers (PTs) which feed to the production control system (not shown). The system danger is that the well operator, in implementing the complex sequence, may make a mistake and inadvertently open all three by-pass valves 15, 16 and 17 with the potentially disastrous result of possibly applying excessive pressure to the production flowline 7, although the barrier valves 5 and 6 are still closed.

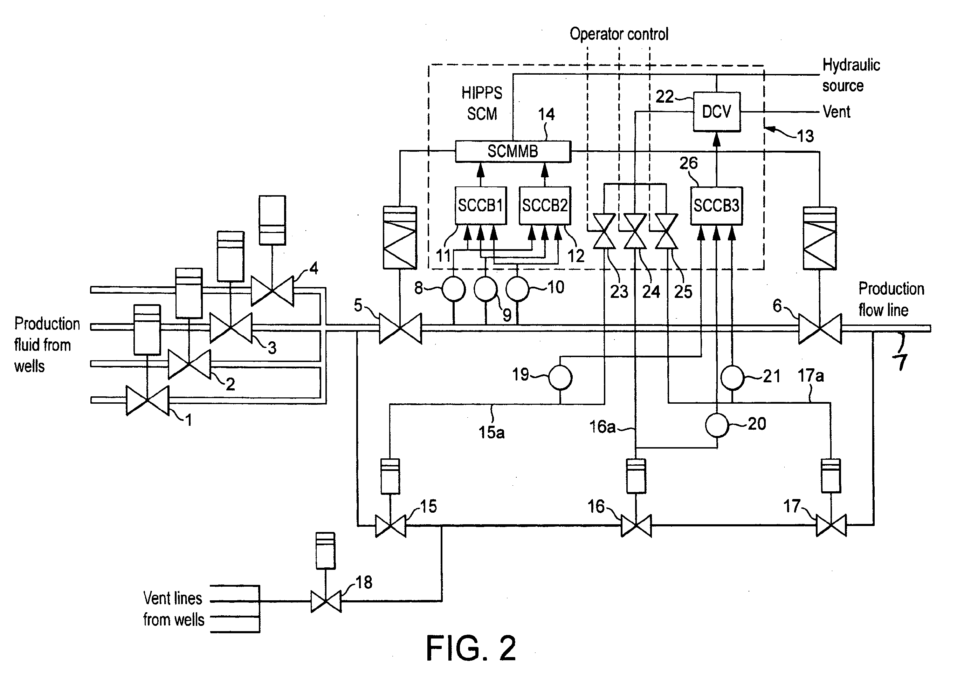

To overcome this risk, the embodiment of Fig. 2 (in which items which correspond with those in Fig. 1 have the same reference numerals as in Fig. 1) uses a further logic solving device and a separate set of PTs 19, 20 and 21 is provided.

Referring to Fig. 2 (in which valves 5 and 6 have closed and the well flowlines 1, 2 and 3 are closed leaving flowline 4 open), the hydraulic power for opening valves 15, 16 and 17 is applied from a hydraulic source via a continuously energized directional control valve (DCV) 22 in HIPPS SCM 13 and respective ones of selectively operable operator controlled valves 23, 24 and 25. Each of PTs 19, 20 and 21 is fitted to a respective one of the hydraulic actuation feed lines 15a, 16a and 17a to valves 15, 16 and 17 from valves 23, 24 and 25. The outputs of PTs 19, 20 and 21 are fed to an additional SCCB 26, which is a modified version of the conventional HIPPS logic solving devices 11 and 12, in that the inputs are polled as 3 out of 3 rather than 2 out of 3 (or 2 out of 4 in some systems). Thus, if the SCCB 26 detects that all three hydraulic supply lines to the by-pass valves 15, 16 and 17 are energised for the purpose of opening these valves, it releases the DCV 22, which latches closed and vents the supply of fluid to the hydraulic actuators of valves 15, 16 and 17 and thus closes all three of them and prevents all three from being open at the same time. The PTs 19, 20, 21, the SCCB 26 and DCV 22 provide a by-pass safety system, and when it has been tripped into the protection state in which valves 23, 24 and 25 are all closed, it will remain in this state until reset by the production control system (PCS). If however the PCS resets the system and the condition of attempting to open all three valves 23, 24 and 25 at the same time persists, then the system will again make the by-pass valve configuration safe, i.e. with all these valves closed. In practice, for single point failure tolerance and optimum safety, dual redundant by-pass safety systems would be fitted, each with an independent suite of PTs and an independent DCV (i.e. a redundant DCV, series connected in the supply line from the hydraulic source).

### Advantages of using the Invention

This invention enables a solution to the problem of providing an independent SIS for HIPPS by-pass valve operation that can be implemented with the same hardware (i.e. a HIPPS logic solving device) as that used to implement the primary HIPPS.

For this to be possible it is only necessary for the logic solving device 26 to support 3 out of 3 voting to complement 2 out of 3 or 2 out of 4 voting (which is typical of HIPPS logic solving devices).This offers significant qualification, certification and configuration advantages (plus the resultant financial advantages), as the same safety integrity level (SIL) rated hardware (and in particular the SIL rated logic solving device hardware) can be employed for both the HIPPS and the HIPPS by-pass safety system.

## Claims

1. A pipeline protection system comprising:
a pipeline (7) for fluid flow;
a plurality of isolation valves (5, 6) in series in said pipeline;
means (8, 9, 10) for sensing a fluid pressure in said pipeline and closing said isolation valves in response to said pressure exceeding a threshold;
a series connection of a plurality of by-pass valves (15, 16, 17) connected in parallel across said isolation valves;
means (23, 24, 25) for selectively opening and closing said by-pass valves; and
safety means (19, 20, 21, 22, 26) adapted to prevent said by-pass valves all being open at the same time.

2. A system according to claim 1, wherein each of said by-pass valves (15, 16, 17) is hydraulically operable and can be opened by supplying hydraulic fluid under pressure from a respective hydraulic feed line (15a or 16a or 17a) to the by-pass valve.

3. A system according to claim 2, wherein said means (23, 24, 25) for selectively opening and closing said by-pass valves (15, 16, 17) comprises a plurality of further valves (23, 24, 25) each of which, when open, supplies hydraulic fluid under pressure from a hydraulic source to a respective one of the by-pass valves for opening the respective by-pass valve.

4. A system according to claim 2 or 3, wherein said safety means (19, 20, 21, 22, 26) comprises second sensing means (19, 20, 21), for sensing pressure in each of said hydraulic feed lines (15a, 16a, 17a) and means (26) coupled with said second sensing means for preventing the pressures in said lines being such as to open all said by-pass valves (15, 16, 17) at the same time.

5. A system according to claim 4, wherein said second sensing means (19, 20, 21) comprises pressure sensors (19, 20, 21) at respective ones of said hydraulic feed lines (15a, 16a, 17a).

6. A system according to claim 5, wherein said means (26) coupled with said second sensing means (19, 20, 21) comprises a logic device (26) which polls outputs from said pressure sensors (19, 20, 21).

7. A system according to claim 3 or any of claims 4 to 6 as dependent on claim 3, wherein said safety means (19, 20, 21, 22, 26) is adapted for venting fluid from said source to prevent said by-pass valves (15, 16, 17) all being open at the same time.

8. A system according to claim 7, wherein said safety means (19, 20, 21, 22, 26) comprises a directional control valve (22) between said source and said further valves (23, 24, 25), said directional control valve supplying fluid from said source to said further valves but venting said fluid for preventing all said by-pass valves (15, 16, 17) from being open at the same time.

9. A method of protecting a pipeline (7) for fluid flow, comprising:
providing a plurality of isolation valves (5, 6) in series in said pipeline;
sensing a fluid pressure in said pipeline and closing said isolation valves in response to said pressure exceeding a threshold;
providing a series connection of a plurality of by-pass valves (15, 16, 17) connected in parallel across said isolation valves; and
selectively opening and closing said by-pass valves if said isolation valves are closed, the method further comprising providing safety means (19, 20, 21, 22, 26) adapted to prevent said by-pass valves all being open at the same time.

10. A method according to claim 9, wherein each of said by-pass valves (15, 16, 17) is hydraulically operable and can be opened by supplying hydraulic fluid under pressure from a respective hydraulic feed line (15a or 16a or 17a) to the by-pass valve.

11. A method according to claim 10, wherein said selectively opening and closing said by-pass valves (15, 16, 17) comprises providing a plurality of further valves (23, 24, 25) each of which, when open, supplies hydraulic fluid under pressure from a hydraulic source to a respective one of the by-pass valves for opening the respective by-pass valve.

12. A method according to claim 10 or 11, wherein said safety means (19, 20, 21, 22, 26) comprises second sensing means (19, 20, 21), for sensing pressure in each of said hydraulic feed lines (15a, 16a, 17a) and means (26) coupled with said second sensing means for preventing the pressures in said lines being such as to open all said by-pass valves (15, 16, 17) at the same time.

13. A method according to claim 12, wherein said second sensing means (19, 20, 21) comprises pressure sensors (19, 20, 21) at respective ones of said hydraulic feed lines (15a, 16a, 17a).

14. A method according to claim 13, wherein said means (26) coupled with said second sensing means (19, 20, 21) comprises a logic device (26) which polls outputs from said pressure sensors (19, 20, 21).

15. A method according to claim 11 or any of claims 12 to 14 as dependent on claim 11, wherein said safety means (19, 20, 21, 22, 26) is adapted for venting fluid from said source to prevent said by-pass valves (15, 16, 17) all being open at the same time.

16. A method according to claim 15, wherein said safety means (19, 20, 21, 22, 26) comprises a directional control valve (22) between said source and said further valves (23, 24, 25), said directional control valve supplying fluid from said source to said further valves but venting said fluid for preventing all said by-pass valves (15, 16, 17) from being open at the same time.

## Patentansprüche

1. Pipelineschutzsystem, Folgendes umfassend:
eine Pipeline (7) für Fluidströmung;
mehrere in Reihe angeordnete Absperrventile (5, 6) in der Pipeline;
Mittel (8, 9, 10) zum Erfassen des Fluiddrucks in der Pipeline und zum Schließen der Absperrventile, falls der Druck einen bestimmten Grenzwert übersteigt;
eine Reihenverbindung mehrerer Bypassventile (15, 16, 17), die parallel zu den Absperrventilen angeordnet sind;
Mittel (23, 24, 25) zum selektiven Öffnen und Schließen der Bypassventile; und
Sicherheitsmittel (19, 20, 21, 22, 26), die angepasst sind, um zu verhindern, dass alle Bypassventile gleichzeitig geöffnet sind.

2. System nach Anspruch 1, wobei jedes der Bypassventile (15, 16, 17) hydraulisch betätigt werden kann und durch Beaufschlagen mit Hydraulikflüssigkeit unter Druck aus einer entsprechenden Hydraulikzuleitung (15a oder 16a oder 17a) zum Bypassventil geöffnet werden kann.

3. System nach Anspruch 2, wobei das Mittel (23, 24, 25) zum selektiven Öffnen und Schließen der Bypassventile (15, 16, 17) mehrerer weitere Ventile (23, 24, 25) umfasst, von denen jedes im geöffneten Zustand Hydraulikflüssigkeit unter Druck aus einer Hydraulikquelle an ein entsprechendes der Bypassventile leitet, um das entsprechende Bypassventil zu öffnen.

4. System nach Anspruch 2 oder 3, wobei das Sicherheitsmittel (19, 20, 21, 22, 26) Folgendes umfasst: zweite Sensormittel (19, 20, 21) zum Erfassen des Drucks in jeder der Hydraulikzuleitungen (15a, 16a, 17a) und mit den zweiten Sensormitteln gekoppelte Mittel (26) zum Verhindern, dass die Drücke in den Leitungen so ausfallen, dass alle Bypassventile (15, 16, 17) gleichzeitig geöffnet sind.

5. System nach Anspruch 4, wobei das zweite Sensormittel (19, 20, 21) Drucksensoren (19, 20, 21) an den jeweiligen Hydraulikzuleitungen (15a, 16a, 17a) umfasst.

6. System nach Anspruch 5, wobei das mit dem zweiten Sensormittel (19, 20, 21) gekoppelte Mittel (26) einen Logikbaustein (26) umfasst, der die Ausgaben der Drucksensoren (19, 20, 21) abfragt.

7. System nach Anspruch 3 oder nach einem der Ansprüche 4 bis 6 in Abhängigkeit von Anspruch 3, wobei das Sicherheitsmittel (19, 20, 21, 22, 26) angepasst ist, um Fluid von der Quelle abzulassen, um zu verhindern, dass die Bypassventile (15, 16, 17) alle gleichzeitig geöffnet sind.

8. System nach Anspruch 7, wobei das Sicherheitsmittel (19, 20, 21, 22, 26) ein Wegeventil (22) zwischen der Quelle und den weiteren Ventilen (23, 24, 25) umfasst, wobei das Wegeventil Fluid von der Quelle zu den weiteren Ventilen leitet, das Fluid aber ablässt, um zu verhindern, dass alle Bypassventile (15, 16, 17) gleichzeitig geöffnet sind.

9. Pipelineschutzverfahren (7) für Fluidströmung, Folgendes umfassend:
Bereitstellen von mehreren Absperrventilen (5, 6) in Reihe in der Pipeline;
Erfassen eines Fluiddrucks in der Pipeline und Schließen der Absperrventile, falls der Druck einen Grenzwert übersteigt;
Bereitstellen einer Reihenverbindung von mehreren Bypassventilen (15, 16, 17), die parallel zu den Absperrventilen verbunden sind; und
selektives Öffnen und Schließen der Bypassventile, falls die Absperrventile geschlossen sind, wobei das Verfahren ferner das Bereitstellen von Sicherheitsmitteln (19, 20, 21, 22, 26) umfasst, die angepasst sind, um zu verhindern, dass alle Bypassventile gleichzeitig geöffnet sind.

10. Verfahren nach Anspruch 9, wobei jedes der Bypassventile (15, 16, 17) hydraulisch betätigt werden kann und durch Beaufschlagen mit Hydraulikflüssigkeit unter Druck aus einer entsprechenden Hydraulikzuleitung (15a oder 16a oder 17a) zum Bypassventil geöffnet werden kann.

11. Verfahren nach Anspruch 10, wobei das selektive Öffnen und Schließen der Bypassventile (15, 16, 17) das Bereitstellen von mehreren weiteren Ventilen (23, 24, 25) umfasst, von denen jedes im geöffneten Zustand Hydraulikflüssigkeit unter Druck aus einer Hydraulikquelle an ein entsprechendes der Bypassventile leitet, um das entsprechende Bypassventil zu öffnen.

12. Verfahren nach Anspruch 10 oder 11, wobei das Sicherheitsmittel (19, 20, 21, 22, 26) Folgendes umfasst: zweite Sensormittel (19, 20, 21) zum Erfassen des Drucks in jeder der Hydraulikzuleitungen (15a, 16a, 17a) und mit den zweiten Sensormitteln gekoppelte Mittel (26) zum Verhindern, dass die Drücke in den Leitungen so ausfallen, dass alle Bypassventile (15, 16, 17) gleichzeitig geöffnet sind.

13. Verfahren nach Anspruch 12, wobei das zweite Sensormittel (19, 20, 21) Drucksensoren (19, 20, 21) an den jeweiligen Hydraulikzuleitungen (15a, 16a, 17a) umfasst.

14. Verfahren nach Anspruch 13, wobei das mit dem zweiten Sensormittel (19, 20, 21) gekoppelte Mittel (26) einen Logikbaustein (26) umfasst, der die Ausgaben der Drucksensoren (19, 20, 21) abfragt.

15. Verfahren nach Anspruch 11 oder nach einem der Ansprüche 12 bis 14 in Abhängigkeit von Anspruch 11, wobei das Sicherheitsmittel (19, 20, 21, 22, 26) angepasst ist, um Fluid von der Quelle abzulassen, um zu verhindern, dass die Bypassventile (15, 16, 17) alle gleichzeitig geöffnet sind.

16. Verfahren nach Anspruch 15, wobei das Sicherheitsmittel (19, 20, 21, 22, 26) ein Wegeventil (22) zwischen der Quelle und den weiteren Ventilen (23, 24, 25) umfasst, wobei das Wegeventil Fluid von der Quelle zu den weiteren Ventilen leitet, das Fluid aber ablässt, um zu verhindern, dass alle Bypassventile (15, 16, 17) gleichzeitig geöffnet sind.

## Revendications

1. Système de protection de pipeline comprenant :
un pipeline (7) pour écoulement de fluide ;
une pluralité de clapets d'isolement (5, 6) en série dans ledit pipeline ;
des moyens (8, 9, 10) destinés à détecter une pression de fluide dans ledit pipeline, et à fermer lesdits clapets d'isolement en réponse au dépassement d'un seuil par ladite pression ;
un montage en série d'une pluralité de clapets de dérivation (15, 16, 17) montés en parallèle à travers lesdits clapets d'isolement ;
des moyens (23, 24, 25) destinés à ouvrir et fermer sélectivement lesdits clapets de dérivation ; et
des moyens de sécurité (19, 20, 21, 22, 26) adaptés pour empêcher lesdits clapets de dérivation d'être tous ouverts en même temps.

2. Système selon la revendication 1, dans lequel chacun desdits clapets de dérivation (15, 16, 17) peut être hydrauliquement actionné et peut être ouvert en fournissant un fluide hydraulique sous pression à partir d'une ligne d'alimentation hydraulique (15a ou 16a ou 17a) respective audit clapet de dérivation.

3. Système selon la revendication 2, dans lequel lesdits moyens (23, 24, 25) destinés à ouvrir et fermer sélectivement lesdits clapets de dérivation (15, 16, 17) comprennent une pluralité de clapets supplémentaires (23, 24, 25) dont chacun, une fois ouvert, fournit un fluide hydraulique sous pression à partir d'une source hydraulique à l'un respectif des clapets de dérivation pour ouvrir le clapet de dérivation respectif.

4. Système selon la revendication 2 ou 3, dans lequel lesdits moyens de sécurité (19, 20, 21, 22, 26) comprennent des seconds moyens de détection (19, 20, 21), destinés à détecter la pression dans chacune desdites lignes d'alimentation hydrauliques (15a, 16a, 17a) et des moyens (26) couplés auxdits seconds moyens de détection destinés à empêcher les pressions dans lesdites lignes d'ouvrir tous lesdits clapets de dérivation (15, 16, 17) en même temps.

5. Système selon la revendication 4, dans lequel lesdits seconds moyens de détection (19, 20, 21) comprennent des capteurs de pression (19, 20, 21) à des lignes respectives parmi lesdites lignes d'alimentation hydrauliques (15a, 16a, 17a).

6. Système selon la revendication 5, dans lequel lesdits moyens (26) couplés auxdits seconds moyens de détection (19, 20, 21) comprennent un dispositif logique (26) qui recueille des sorties provenant desdits capteurs de pression (19, 20, 21).

7. Système selon la revendication 3 ou l'une quelconque des revendications 4 à 6 lorsqu'elle dépend de la revendication 3, dans lequel lesdits moyens de sécurité (19, 20, 21, 22, 26) sont adaptés pour éventer le fluide provenant de ladite source pour empêcher lesdits clapets de dérivation (15, 16, 17) d'être tous ouverts en même temps.

8. Système selon la revendication 7, dans lequel lesdits moyens de sécurité (19, 20, 21, 22, 26) comprennent un clapet de régulation directionnelle (22) entre ladite source et lesdits clapets supplémentaires (23, 24, 25), ledit clapet de régulation directionnelle fournissant un fluide de ladite source auxdits clapets supplémentaires mais en éventant ledit fluide pour empêcher tous lesdits clapets de dérivation (15, 16, 17) d'être ouverts en même temps.

9. Procédé de protection d'un pipeline (7) pour écoulement de fluide, comprenant les étapes consistant à :
fournir une pluralité de clapets d'isolement (5, 6) en série dans ledit pipeline ;
détecter une pression de fluide dans ledit pipeline et fermer lesdits clapets d'isolement en réponse au dépassement d'un seuil par ladite pression ;
fournir un montage en série d'une pluralité de clapets de dérivation (15, 16, 17) montés en parallèle à travers lesdits clapets d'isolement ; et
ouvrir et fermer sélectivement lesdits clapets de dérivation si lesdits clapets d'isolement sont fermés, le procédé comprenant en outre la fourniture de moyens de sécurité (19, 20, 21, 22, 26) adaptés pour empêcher lesdits clapets de dérivation d'être tous ouverts en même temps.

10. Procédé selon la revendication 9, dans lequel chacun desdits clapets de dérivation (15, 16, 17) peut être hydrauliquement actionné et peut être ouvert en fournissant un fluide hydraulique sous pression depuis une ligne d'alimentation hydraulique (15a ou 16a ou 17a) respective audit clapet de dérivation.

11. Procédé selon la revendication 10, dans lequel lesdites ouverture et fermeture sélectives desdits clapets de dérivation (15, 16, 17) comprennent la fourniture d'une pluralité de clapets supplémentaires (23, 24, 25) dont chacun, une fois ouvert, fournit un fluide hydraulique sous pression d'une source hydraulique à un clapet respectif parmi lesdits clapets de dérivation pour ouvrir le clapet de dérivation respectif.

12. Procédé selon la revendication 10 ou 11, dans lequel lesdits moyens de sécurité (19, 20, 21, 22, 26) comprennent des seconds moyens de détection (19, 20, 21), permettant de détecter la pression dans chacune desdites lignes d'alimentation hydrauliques (15a, 16a, 17a) et des moyens (26) couplés auxdits seconds moyens de détection permettant d'empêcher les pressions dans lesdites lignes d'ouvrir tous lesdits clapets de dérivation (15, 16, 17) en même temps.

13. Procédé selon la revendication 12, dans lequel lesdits seconds moyens de détection (19, 20, 21) comprennent des capteurs de pression (19, 20, 21) à des lignes respectives parmi lesdites lignes d'alimentation hydrauliques (15a, 16a, 17a).

14. Procédé selon la revendication 13, dans lequel lesdits moyens (26) couplés auxdits seconds moyens de détection (19, 20, 21) comprennent un dispositif logique (26) qui recueille des sorties provenant desdits capteurs de pression (19, 20, 21).

15. Procédé selon la revendication 11 ou l'une quelconque des revendications 12 à 14 lorsqu'elle dépend de la revendication 11, dans lequel lesdits moyens de sécurité (19, 20, 21, 22, 26) sont adaptés pour éventer le fluide provenant de ladite source pour empêcher lesdits clapets de dérivation (15, 16, 17) d'être tous ouverts en même temps.

16. Procédé selon la revendication 15, dans lequel lesdits moyens de sécurité (19, 20, 21, 22, 26) comprennent un clapet de régulation directionnelle (22) entre ladite source et lesdits clapets supplémentaires (23, 24, 25), ledit clapet de régulation directionnelle fournissant un fluide de ladite source auxdits clapets supplémentaires mais en éventant ledit fluide pour empêcher tous lesdits clapets de dérivation (15, 16, 17) d'être ouverts en même temps.
